# EUROPEAN PATENT SPECIFICATION

(11) **EP 3 150 331 B1**
(45) Date of publication and mention of the grant of the patent: **23.05.2018**
(21) Application number: 16190232.5
(22) Date of filing: 22.09.2016
(51) Int. Cl.: B23Q 16/10

(54) **TOOL-HOLDER TURRET WITH COAXIAL BRAKE**
WERKZEUGREVOLVER MIT KOAXIALER BREMSE
TOURELLE REVOLVER À OUTILS AVEC FREIN COAXIAL

(30) Priority: 28.09.2015 IT UB20153942
(43) Date of publication of application: 05.04.2017
(73) Proprietor: Duplomatic Automation S.r.l., 20025 Legnano (Milano) (IT)
(72) Inventor: De Bernardi, Franco, 21052 Busto Arsizio VA (IT)
(74) Representative: Perani & Partners S.p.A.

(56) References cited:
- EP-A1- 0 343 347
- EP-A1- 0 597 413
- EP-A2- 0 299 556
- EP-A2- 0 343 329
- IT-B- 1 138 598

## Description

The present invention relates to a tool-holder turret of the type comprising a stationary base body with a cavity extending along a longitudinal axis (X-X), a tool-holding disk capable of rotating in both directions of rotation relative to the stationary base body about an axis of rotation which is coaxial to and coincident with said longitudinal axis (X-X), said tool-holding disk being mounted to the end of a shaft which extends along said longitudinal axis (X-X), a first cylindrical annular body which is keyed to said shaft and is only free to axially slide thereon between a first axial position and a second axial position against elastic means acting between said first cylindrical body and said tool-holding disk, a second cylindrical annular body also keyed to said shaft and rotating relative thereto, said second cylindrical body having a plurality of symmetrical cam profiles arranged over a circumference of the front surface of its proximal end, with respect to said tool-holding disk, lock members for locking said tool-holding disk relative to said stationary base body when said first cylindrical annular body is in its first axial position and for unlocking it when it is in its second axial position, said first cylindrical annular body having a plurality of cam followers engaged at their front with respective symmetrical can profiles of said second annular body, said cam followers and said cam profiles causing said first cylindrical annular body to axially move on said shaft in either direction as a result of angular displacements of said second cylindrical annular body, an electric servo-motor, which is kinematically linked to said second cylindrical annular body to impart angular displacements thereto in both directions of rotation coaxial to said shaft.

Tool-holder turrets of the aforementioned type are well known in the art.

As described, for instance, in IT 1,138,598, they use an electric motor which, through adequate mechanisms wit cam profiles, unlocks and locks the tool-holding disk from and to the turret body to allow rotation thereof for tool change.

The same electric motor also provides angular displacement of the disk to change the position of the tool being used.

Therefore, these turrets have both advantages of using a single source of energy, i.e. electric power, for their operation and of employing a single motor for both movements.

This provides considerable advantages as compared with other types of turrets, in which electric energy is used to power the motor that actuates the rotation of the tool-holding disk, for tool change, and hydraulic or pneumatic energy is used to cause the actuation of the members of the lock and unlock members for locking and unlocking the tool-holding disk.

The use of two different types of energies for actuation of a tool-holder turret is known to discourage the use thereof, as it requires the provision of all the necessary ducts from the source to the machine tool on which the turret operates.

Nevertheless, the mechanisms that these prior art turrets, as disclosed in IT 1,138,598, use to stop the angular movement of the disk when the turret reaches a new tool position, comprise a peg which snaps into a corresponding notch when the latter is presented before it as the disk is being rotated, and since the notch corresponds to the desired tool position, the electric control device impart a release command to an electromagnet connected to the peg.

This generates shocks and consequent oscillations around the selected stop position, due to the inertia of the rotating masses of the tool-holding disk, which shocks impose a limitation on the rotation speed, and require in any case the provision of damping members, which add complexity to the turret construction and increase its cost.

Particularly, the limitation of the speed rotation involves longer tool positioning times, which will affect processing time.

In an attempt to reduce tool positioning times and increase machine throughput, servo-controlled turrets, equipped with hydraulic locking and unlocking systems have been developed in the art.

Nevertheless, while these technical solutions have proved efficiency in operation, they are still poorly cost-effective, as they require two energy supply modes: a power source for rotation and a hydraulic source for locking and unlocking the tool-holding disk.

The provision of two energy supply modes involves some construction complexity in the distribution connections to the machine stations, and also creates heat dissipation problems.

In an attempt to use a single source of energy, particularly electric power, and to simplify the mechanisms for stopping the tool-holding disk when changing tool position, the use of two electric servomotors has been suggested, i.e. a first motor for the angular displacement movements of the disk to change the tool position and a second servomotor for the movement required to lock and unlock the tool-holding disk, through cam members, as described, for instance, in WO 2009/012875.

Nevertheless, the use of a second servomotor, as disclosed in WO 2009/012875, implies that it must be equipped with its own electronic control/command devices, in addition to those required by the servomotor that is used for the angular movements of the disk, and this considerably increases the cost of the turret, and also exposes it to possible malfunctions, such as failures or wrong operation of its parts.

Therefore, the object of the present invention is to provide a tool-holder turret that uses the electric servomotor that is designed for angular displacement of the disk to change the tool position, to also lock and unlock the tool-holding disk, without being affected by the drawbacks encountered in the above described prior art turrets.

A further object of the present invention is to provide a technical arrangement for locking and unlocking the tool-holding disk of a turret, which can provide optimized use of the capacity of an electric servomotor in terms of disk displacement speed, once the disk has been unlocked, without increasing the overall costs of the turret and adversely affecting its operational reliability.

These and other objects, as better explained hereafter, are fulfilled by a turret as characterized in the accompanying claim 1.

The invention will be now described in greater detail with reference to certain preferred embodiments thereof, given by way of illustration and without limitation, and shown in the annexed drawings, in which:
- Figure 1 shows a longitudinal section of the turret of the invention, with the tool-holding disk in a locked state relative to the stationary base body;
- Figure 2 shows a longitudinal section of the turret of the invention, with the tool-holding disk in an unlocked state relative to the stationary base body and free to be rotated to change the tool position;

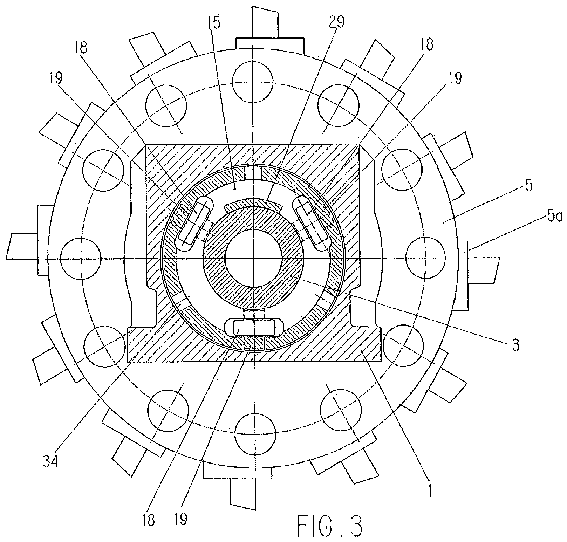

- Figure 3 shows a partially cross sectional view, transverse to the axis of rotation of the tool-holding disk, as taken along the line III-III of Figure 1;

- Figure 4 shows a partially cross sectional view, transverse to the axis of rotation X-X, as taken along the line IV-IV of Fig. 1, with the turret in the locked position;
- Figure 5 shows a partially sectional view like the one of Figure 4, as taken along the line IV-IV of Fig. 2, with the turret unlocked and ready for tool position change;
- Figure 6 shows a straight-extending view of the position taken by the cam profiles of the first cylindrical annular body and the cam followers of the second cylindrical annular body with the turret in the locked position;
- Figure 7 shows a straight-extending view of the position taken by the cam profiles of the first cylindrical annular body and the cam followers of the second cylindrical annular body with the turret in the unlocked position, and ready to be rotated for tool position change;
- Figure 8 shows a longitudinal section of the turret of the invention, in a modified embodiment in which the electric servomotor is offset from the shaft of the tool-holding disk with the tool-holding disk in a locked state relative to the stationary base body;
- Figure 9 shows a longitudinal section of the turret like the one of Figure 1, with a change made at the front coupling of the first annular body connected to the shaft of the tool-holding disk, with the end of the second cylindrical annular body.

Referring to the above mentioned figures, numeral 1 designates the stationary base body of the turret, which defines an inner cavity 2 extending along a longitudinal axis X-X coinciding with the axis of rotation of a shaft 3 having the tool-holding disk 5 fixed at its end 4, the tools being generally referenced 5a.

The shaft 3 preferably has an axial cavity 3a, as shown in the drawings, for the passage of electric, hydraulic, pneumatic lines or mechanical transmissions designed for actuation of any conventional rotating tools or mechanical equipment on the tool-holding disk 5.

The shaft 3 is controlled in both directions of rotation to displace the tool-holding disk 5, by an electric motor, namely an electric servomotor 6 which, according to the invention, is also used to unlock the tool-holding disk 5 and later lock it once it has been angularly displaced to a different tool position, as described in greater detail hereinafter.

The turret comprises lock members for stable positioning thereof in any work position of the tools.

As is known in the art, these lock members comprise a first ring of teeth or gear 10, which is carried by an annular body 11, rigidly joined to the base body 1 of the turret, a second ring of teeth or gear 12, concentric with the first toothing and carried by an intermediate plate 13, with a central opening 13a, that is rigidly joined to the tool-holding disk 5 on the side that faces away from the tool mounting surface, and a third ring of teeth or gear, referenced 14.

The latter ring of teeth 14 is carried by a first cylindrical annular body 15, which is coaxial with the shaft 3 and can axially move thereon but is prevented from rotating due to a spline engagement. The ring of teeth 14 faces the rings of teeth 10 and 12 with such a radial extent as to engage both gears when said annular body 15 is axially displaced in the turret locking position.

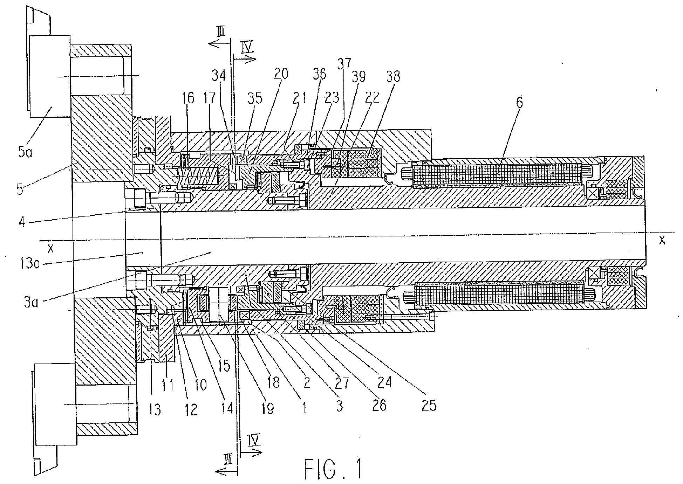

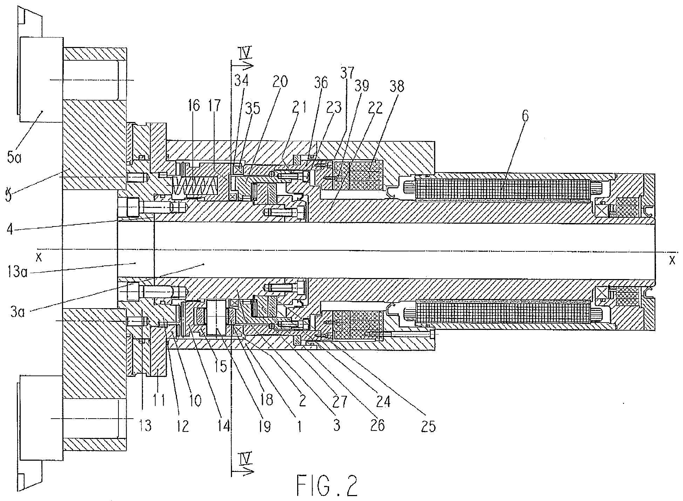

The axial displacement of the first cylindrical annular body 15 and hence the actuation of the lock members for displacement thereof between a locked position, as shown in Figure 1 and an unlocked position, as shown in Figure 2, and vice versa, against a plurality of springs 16, is obtained by the use of cam profiles 17, which are carried at the front by a second cylindrical annular body 20 and engage with cam followers, e.g. in the form of rollers 18 mounted by means of a pin 19, to said first cylindrical annular body 15. The second annular cylindrical body 20, is also mounted to the shaft 3, and can rotate about the axis X-X.

For this purpose, the second cylindrical annular body 20 is connected to the flange end 21 of the shaft 22 of the servomotor 6 by means of a plurality of peripherally arranged screws 23.

A preloaded axially biasing member, in the form of a disk spring 24, is placed between said second cylindrical annular body 20 and the flange end 21 of the drive shaft 22, and abuts an axial shoulder 25 formed in said shaft 3.

In the illustrated example, said disk spring is concentric with said shaft 3 of the tool-holding disk 5 and its preload may be adjusted by interposition of a shim, in the form of a washer 26 and a thrust bearing 27.

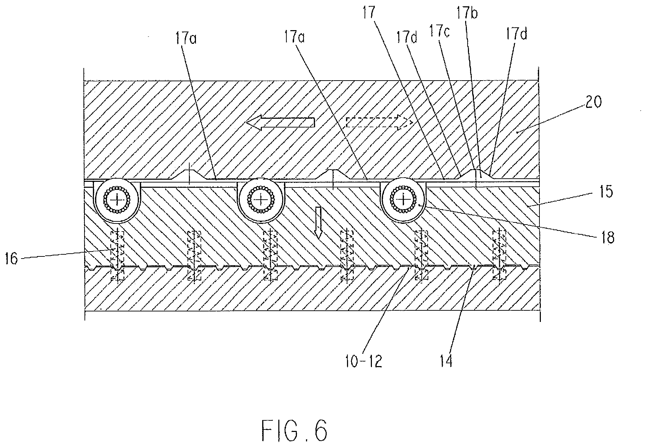

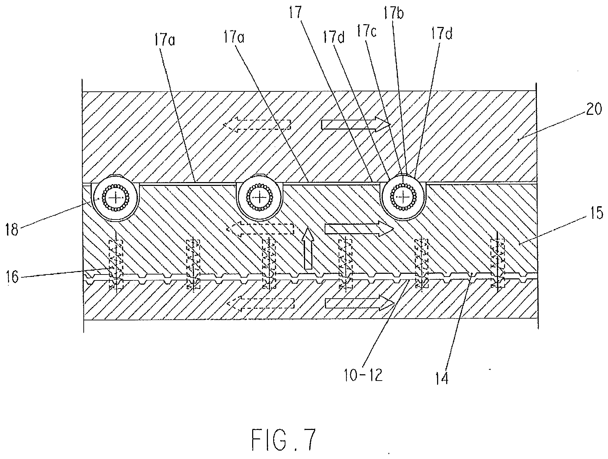

Particularly referring to Figures 6 and 7, it shall be noted that the cam profile of the cylindrical annular body 20, generally referenced 17, comprises flat sections 17a and a plurality of cavities 17b, each having a flat bottom 17c, recessed below the plane of the flat sections of the cam profile. The sides 17d of each cavity are inclined and symmetrical with respect to the center line of the flat bottom and are connected to the flat sections 17a.

The cam follower elements, i.e. the rollers 18 are preferably arranged on the first cylindrical annular body 15, preferably at the vertices of an equilateral triangle, or alternatively at the vertices of a regular hexagon with the same arrangement as the cavities 17b of the cam profile 17. When these elements are engaged at their front with the respective flat sections 17a of the cam profile 17, as shown in Figure 6, they maintain the first cylindrical annular body 15 axially offset toward the tool-holding disk 5 against the springs 16 and with the gear 14 inserted in the front gears 10 and 12, whereas the cylindrical annular body 20 is axially biased against the shoulder 25 through the thrust bearing 27, the shim 26 and the disk spring 24.

Therefore, the tool-holding disk is in its locked position, as shown in Figure 1, under the preload of the disk spring 24.

Conversely, when the body 20 is rotated in either direction as shown by the arrows of Figures 6 and 7 in response to a command by the servomotor 6, it is angularly displaced around the shaft 3 and the rollers 18 move level to the respective cavities 17b and sink toward the bottom, in contact with the sides 17d, thereby allowing the first cylindrical annular body 15 to axially move under the action of the springs 16.

Such axial movement allows disengagement of the gear 14 from the gears 10 ad 12, thereby releasing the tool-holding disk 5 for the latter to be free of being angularly moved for tool position change, as explained hereinbefore.

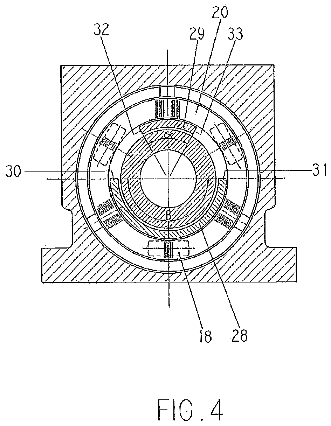

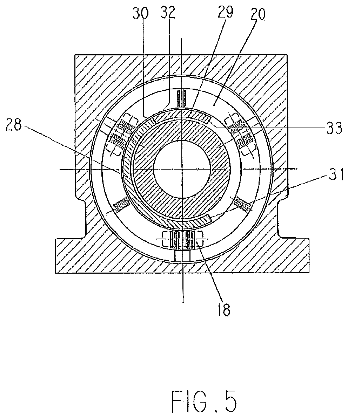

Referring to Figures 4 and 5, it shall be noted that the second cylindrical annular body 20 has a rib 28 on the front surface that faces the first cylindrical annular body 15, said rib axially projecting toward the tool-holding disk 5 and extending over a given arc β of a circumference.

Likewise, the first annular body 15 that is coupled to the shaft 3 connected to the tool-holding disk 5 has a front shoulder 29 facing the second cylindrical annular body 20 and extending over a given arc α of a circumference which radially coincides with the circumference of the rib 28 of said second cylindrical annular body 20, in the arc of a circumference not occupied by said rib 28.

The circumferential ends 30 and 31 of said rib 28 and the circumferential ends 32 and 33 of said shoulder 29 define respective abutments which, when engaged together, are adapted to transfer the angular displacements generated by the servomotor 6 to said shaft 3, and hence to transfer the angular movement of the tool-holding disk 5 to change the tool position.

As shown, the circumferential end 30 abuts the circumferential end 32 once the second cylindrical annular body 20 has undergone a clockwise angular, see Figure 5, and will have allowed the first cylindrical annular body 15 to axially move and release the front gear 14 from the gears 10 and 12, and to set the tool-holding disk 5 into an unlocked state, such that it may be rotated for tool position change.

In case of a counterclockwise angular displacement of the second cylindrical annular body 20, the end 31 of the rib 28 will abut the end 33 of the shoulder 29, thereby allowing angular displacement of the disk 5 once the latter has been unlocked.

The first cylindrical annular body 15 has at least one peripheral cavity, referenced 34, which is engaged with at least one tooth 35 formed at the end of an auxiliary tubular shaft 36.

The cavity 34 and the tooth 35 are mutually and rotatably engaged and capable of relative axial translation.

The auxiliary tubular shaft 36 is oriented, in the example of Figure 1, coaxial with the axis X-X of the shaft 3 of the tool-holding disk 5 and with the shaft 22 of the servomotor 6.

An electromagnetic brake, generally referenced 38, which may be a friction brake or preferably a brake with front teeth, is mounted, for instance by means of conventional screws, referenced 39, to the end 37 of the shaft 36 opposite to the end with the tooth 35 and the cavity 34.

When this brake is enabled, it locks the rotation of the shaft 36 and maintains, as a result, through the tooth 35 and the cavity 34, the first cylindrical annular body 15 in a locked rotation state, thereby also locking any angular displacement of the shaft 3 and hence of the tool-holding disk 5.

Conversely, when such electromagnetic brake is disabled, the shaft 36 is free to rotate, and so is the first cylindrical annular body 15 with the cavity 34 engaged with the tooth 35.

The above description clearly shows that a single electric servomotor 6 is able to both unlock the tool-holding disk 5 and, once the latter is unlocked, by simultaneous front engagement between the rib 28 and the shoulder 29, impart the required angular displacement to the tool-holding disk 5 for the latter to reach a different tool position. This is possible because the electromagnetic brake 38 is disabled and the shaft 3 may rotate jointly with the second cylindrical annular body 20 which previously unlocked the gears 14, 10 and 12 that locked the tool-holding disk by acting on the first annular body 15.

Once the new tool position has been attained, and the electromagnetic brake 38 has been thus enabled, the servomotor 6 reverses its direction of rotation, and imparts an angular displacement to the second cylindrical annular body 29 whose cam profile 17 interact with the cam follower rollers 18 of the first cylindrical annular body 17, thereby only causing the axial displacement of said first cylindrical annular body 15 toward the tool-holding disk 5, inserting the gear 14 into the front gears 10 and 12 and causing the tool-holding disk 5 to be locked again.

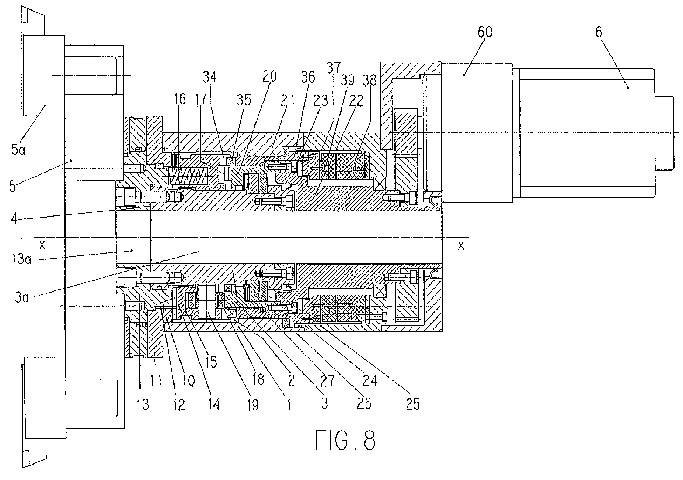

The turret is susceptible of construction modifications, including the position of the servomotor 6 which, like in the example of Figure 8 , may be offset from the axis X-X of the shaft 3 of the tool-holding disk 5 and is preferably oriented parallel thereto with the interposition of a transmission unit with a speed reducer, generally referenced 60 in the above mentioned Figure 8.

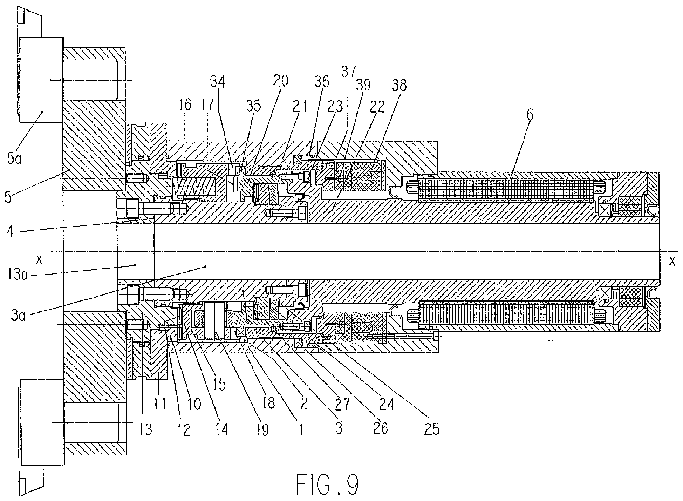

Furthermore, as shown in Figure 9, the first annular body 15 connected to the shaft 3 of the turret may be formed without the front shoulder 29 that faces the second cylindrical annular body 20, and the latter may be formed without the rib 28.

With this construction, the angular displacements caused by the servomotor 6 are directly transmitted to the shaft 3 of the tool-holding disk due to the engagement of the rollers 18 of the first cylindrical annular body 15 with the cam profiles 17 of the cylindrical annular body 20.

Further construction modifications, not shown, may relate to the position of the disk spring 24 and its preload conditions, without departure from the scope of the invention as described hereinbefore and claimed hereinafter.

## Claims

1. A tool-holder turret comprising a stationary base body (1) with a cavity (2) extending along a longitudinal axis (X-X), a tool-holding disk (5) capable of rotating in both directions of rotation relative to the stationary base body (1) about an axis of rotation which is coaxial to and coincident with said longitudinal axis (X-X), said tool-holding disk (5) being mounted to the end of a shaft (3) which extends along said longitudinal axis (X-X), a first cylindrical annular body (15) which is keyed to said shaft (3) and is only free to axially slide thereon between a first axial position and a second axial position against elastic means (16) acting between said first cylindrical body (15) and said tool-holding disk (5), a second cylindrical annular body (20), which is also keyed to said shaft (3) and capable of rotating relative thereto, said second cylindrical body (15) having a plurality of symmetrical cam profiles (17, 17a, 17b,17c, 17d) arranged over a circumference of the front surface of its proximal end, with respect to said tool-holding disk (5), lock members (14, 10, 12) for locking said tool-holding disk (5) relative to said stationary base body (1) when said first cylindrical annular body (15) is in its first axial position and for unlocking it when it is in its second axial position, said first cylindrical annular body (15) having a plurality of cam followers (18) engaged at their front with respective symmetrical cam profiles (17,17a,17b,17c,17d) of said second annular body (20), said cam followers and said cam profiles causing said first cylindrical annular body (15) to axially move on said shaft (3) in either direction as a result of angular displacements of said second cylindrical annular body (20), an electric servo-motor (6), which is kinematically linked to said second cylindrical annular body (20) to impart angular displacements thereto in both directions of rotation coaxial to said shaft (3), **characterized in that** said first cylindrical annular body (15) is kinetically linked (34,35) to an auxiliary tubular shaft (36) coaxial with said shaft (3), and having a braking device (38) that locks its rotation upon actuation.

2. A turret as claimed in claim 1, **characterized in that** said second cylindrical annular body (20) has a rib (28) a rib (28) that axially projects toward said tool-holding disk (5) and extends over a given arc of a circumference (β), that said shaft (3), connected to said tool-holding disk (5) is coupled to said first cylindrical annular body (15) having a front shoulder (29), facing said second cylindrical annular body (20) and extending over a given arc of a circumference (α) which radially coincides with the circumference of the rib (28) that axially projects out of said second cylindrical annular body (20), in the portion of the arc that is not covered by said rib, the circumferential ends (30, 31) of said rib (28) and those (32, 33) of said shoulder defining respective abutments, such that when said abutments are mutually engaged, they are adapted to transfer the angular displacements generated by said servo-motor (6) to said shaft (3).

3. A turret as claimed in claim 1 or 2, **characterized in that** said lock members comprise a first ring of teeth (10) carried by said stationary base body (1) and arranged around said longitudinal axis (X-X) of said cavity (2), a second ring of teeth (12) concentric with said first ring of teeth and carried by said rotary tool-holding disk (5), a third ring of teeth (14) fixed to the axial end facing the tool-holding disk (5) of said first cylindrical annular body (15).

4. A turret as claimed in claims 1 and 3, **characterized in that** said braking device (38) is an electromagnetic brake which is coupled to the end (37) of said auxiliary shaft (36) kinematically linked to said first cylindrical annular body (15).

5. A turret as claimed in claims 1 to 4, **characterized in that** each of said symmetrical cam profiles comprises a cavity (17b) whose flat bottom (17c) is lower than a reference plane surface (17a) and whose sides (17d) comprise flat sections which are symmetrically inclined to the bottom (17c) of the cavity).

6. A turret as claimed in claims 1 to 5, **characterized in that** said cam followers comprise rollers (18) freely rotating about respective pins (19) carried by said first cylindrical annular body (15), the periphery of said rollers contacting respective cam profiles carried by said second cylindrical annular body (20).

7. A turret as claimed in claim 1 or 2, **characterized in that** said first cylindrical annular body (15) has at least one cavity (34) on its outer peripheral surface, that said auxiliary tubular shaft (36) has at least one tooth (35) rotatably engaged with said cavity (34) and capable of axial translation relative thereto.

8. A turret as claimed in any of claims 1 to 7, **characterized in that** it comprises a pre-loaded axially biasing member (24) located between said second cylindrical annular body (20) and a stop member (25) consisting of an axial shoulder formed in said shaft (3).

9. A turret as claimed in claim 8, **characterized in that** said pre-loaded biasing member is a disk spring (24) located concentric with said shaft (3) of the tool-holding disk (5), said stop member being adjustable by interposition of a shim (26) for imparting the desired pre-load to the disk spring.

10. A turret as claimed in any of claims 1 to 9, **characterized in that** the axis of rotation of the servo-motor is located coaxial with the rotating shaft (3) of the tool-holding disk (5).

11. A turret as claimed in any of claims 1 to 10, **characterized in that** the axis of rotation of the servo-motor (6) is offset from the axis of rotation (3) of the tool-holding disk (5) and is connected thereto with kinematic members (60) interposed therebetween.

12. A turret as claimed in any of claims 1 to 11, **characterized in that** when the cam followers (18) carried by said first cylindrical annular body (15) contact the sides (17d) of the cam profiles (17b) carried by the second cylindrical annular body (20) and when said first cylindrical annular body (15) is under a predetermined spring preload (16), they are adapted to transfer the angular displacements generated by said servomotor (6) to the shaft (3) of the tool-holding disk (5).

## Patentansprüche

1. Werkzeugrevolver umfassend einen stationären Basiskörper (1) mit einem Hohlraum (2), der sich längs einer Längsachse (X-X) erstreckt, eine Werkzeughalterscheibe (5), die in der Lage ist, sich in beide Rotationsrichtungen relativ zum stationären Basiskörper (1) um eine Rotationsachse zu drehen, die koaxial und koinzident mit der Längsachse (X-X) ist, wobei die Werkzeughalterscheibe (5) am Ende einer Welle (3) eingebaut ist, die sich längs der Längsachse (X-X) erstreckt, einen ersten zylindrischen, ringförmigen Körper (15), der auf der Welle (3) verkeilt ist und nur axial hierauf zwischen einer ersten axialen Position und einer zweiten axialen Position gegen elastische Mittel (16) gleitbar ist, die zwischen dem ersten zylindrischen Körper (15) und der Werkzeughalterscheibe (5) wirksam sind, einen zweiten zylindrischen ringförmigen Körper (20), der ebenfalls auf der Welle (3) verkeilt und in der Lage ist, sich relativ hierzu zu drehen, wobei der zweite zylindrische Körper (15) eine Mehrzahl von symmetrischen Nockenprofilen (17, 17a, 17b, 17c, 17d) aufweist, die über einem Umfang der Vorderfläche seines proximalen Endes in Bezug auf die Werkzeughalterscheibe (5) angeordnet sind, Verriegelungselemente (14, 10, 12) zum Verriegeln der Werkzeughalterscheibe (5) relativ zu dem stationären Basiskörper (1), wenn der erste zylindrische ringförmige Körper (15) sich in seiner ersten axialen Position befindet, und zum Entriegeln derselben, wenn er sich in seiner zweiten axialen Position befindet, wobei der erste zylindrische ringförmige Körper (15) eine Mehrzahl von Nockenstößeln (18) aufweist, die an ihrem vorderen Ende in entsprechende symmetrische Nockenprofile (17, 17a, 17b, 17c, 17d) des zweiten ringförmigen Körpers (20) eingreifen, wobei die Nockenstößel und die Nockenprofile bewirken, dass der erste zylindrische ringförmige Körper (15) sich infolge von Winkelverschiebungen des zweiten zylindrischen ringförmigen Körpers (20) axial auf der Welle (3) in beide Richtungen bewegt, einen elektrischen Servomotor (6), der kinematisch mit dem zweiten zylindrischen ringförmigen Körper (20) verbunden ist, um diesem Winkelverschiebungen in beide Rotationsrichtungen koaxial zu der Welle (3) zu erteilen, **dadurch gekennzeichnet, dass** der erste zylindrische ringförmige Körper (15) kinetisch (34, 35) mit einer zusätzlichen Hohlwelle (36) verbunden ist, die koaxial zu der Welle (3) verläuft und eine Bremsvorrichtung (38) aufweist, die bei Betätigung seine Rotation blockiert.

2. Revolver nach Anspruch 1, **dadurch gekennzeichnet, dass** der zweite zylindrische ringförmige Körper (20) eine Rippe (28) aufweist, welche Rippe (28) axial zu der Werkzeughalterscheibe (5) hin auskragt und sich über einem gegebenen Umfangsbogen (β) erstreckt, wobei die Welle (3), die mit der Werkzeughalterscheibe (5) verbunden ist, mit dem ersten zylindrischen, ringförmigen Körper (15) gekuppelt ist, der eine vordere Schulter (29) aufweist, die dem zweiten zylindrischen ringförmigen Körper (20) zugewandt ist und sich über einem gegebenen Umfangsbogen (α) erstreckt, der sich radial mit dem Umfang der Rippe (28) deckt, die axial aus dem zweiten zylindrischen ringförmigen Körper (20) in dem Abschnitt des Bogens auskragt, der nicht von der Rippe bedeckt ist, wobei die umfangseitigen Enden (30, 31) der Rippe (28) und jene (32, 33) der Schulter jeweilige Widerlager definieren, derart, dass bei gegenseitigem Ineingriffnehmen der Widerlager diese dazu geeignet sind, die von dem Servomotor (6) erzeugten Winkelverschiebungen auf die Welle (3) zu übertragen.

3. Revolver nach Anspruch 1 oder 2, **dadurch gekennzeichnet, dass** die Verriegelungselemente einen ersten Zahnring (10) umfassen, der von dem stationären Basiskörper (1) getragen und um die Längsachse (X-X) des Hohlraums (2) angeordnet ist, einen zweiten Zahnring (12), der konzentrisch mit dem ersten Zahnring und von der drehenden Werkzeughalterscheibe (5) getragen ist, einen dritten Zahnring (14), der an dem axialen Ende befestigt ist, das der Werkzeughalterscheibe (5) des ersten zylindrischen ringförmigen Körpers (15) zugewandt ist.

4. Revolver nach Anspruch 1 und 3, **dadurch gekennzeichnet, dass** die Bremsvorrichtung (38) eine elektromagnetische Bremse ist, die mit dem Ende (37) der zusätzlichen Welle (36) gekuppelt ist, die kinematisch mit dem ersten zylindrischen ringförmigen Körper (15) verbunden ist.

5. Revolver nach den Ansprüchen 1 bis 4, **dadurch gekennzeichnet, dass** jedes symmetrische Nockenprofil einen Hohlraum (17b) umfasst, dessen flacher Boden (17c) niedriger als eine ebene Referenzfläche (17a) ist und dessen Seiten (17d) flache Abschnitte umfassen, die symmetrisch zum Boden (17c) des Hohlraums geneigt sind.

6. Revolver nach den Ansprüchen 1 bis 5, **dadurch gekennzeichnet, dass** die Nockenstößel Rollen (18) umfassen, die sich frei um jeweilige Stifte (19) drehen, die von dem ersten zylindrischen ringförmigen Körper (15) getragen sind, wobei der Umfang der Rollen jeweilige Nockenprofile berührt, die von dem zweiten zylindrischen ringförmigen Körper (20) getragen sind.

7. Revolver nach Anspruch 1 oder 2, **dadurch gekennzeichnet, dass** der erste zylindrische ringförmige Körper (15) wenigstens einen Hohlraum (34) auf seiner äußeren Umfangsfläche aufweist, wobei die zusätzliche Hohlwelle (36) wenigstens einen Zahn (35) aufweist, der den Hohlraum (34) drehbar in Eingriff nimmt und axial hierzu translationsbeweglich ist.

8. Revolver nach einem der Ansprüche 1 bis 7, **dadurch gekennzeichnet, dass** er ein vorgespanntes Element (24) zum axialen Vorspannen umfasst, das zwischen dem zweiten zylindrischen ringförmigen Körper (20) und einem Stoppglied (25) angeordnet ist, das aus einer in der Welle (3) gebildeten axialen Schulter besteht.

9. Revolver nach Anspruch 8, **dadurch gekennzeichnet, dass** das vorgespannte Element zum Vorspannen eine Scheibenfeder (24) ist, die konzentrisch mit der Welle (3) der Werkzeughalterscheibe (5) angeordnet ist, wobei das Stoppglied durch Einlegen einer Distanzscheibe (26) einstellbar ist, um der Scheibenfeder die gewünschte Vorspannung zu erteilen.

10. Revolver nach einem der Ansprüche 1 bis 9, **dadurch gekennzeichnet, dass** die Rotationsachse des Servomotors koaxial zu der sich drehenden Welle (3) der Werkzeughalterscheibe (5) angeordnet ist.

11. Revolver nach einem der Ansprüche 1 bis 10, **dadurch gekennzeichnet, dass** die Rotationsachse des Servomotors (6) versetzt von der Rotationsachse (3) der Werkzeughalterscheibe (5) angeordnet und mit dazwischen eingefügten kinematischen Elementen (60) damit verbunden ist.

12. Revolver nach einem der Ansprüche 1 bis 11, **dadurch gekennzeichnet, dass** wenn die Nockenstößel (18), die von dem ersten zylindrischen ringförmigen Körper (15) getragen sind, die Seiten (17d) der Nockenprofile (17b) berühren, die von dem zweiten zylindrischen ringförmigen Körper (20) getragen sind und wenn der erste zylindrische ringförmige Körper (15) unter einer zuvor festgelegten Federvorspannung (16) steht, sie dazu geeignet sind, die von dem Servomotor (6) erzeugten Winkelverschiebungen auf die Welle (3) der Werkzeughalterscheibe (5) zu übertragen.

## Revendications

1. Tourelle porte-outils comprenant un corps de base fixe (1) avec une cavité (2) s'étendant suivant un axe longitudinal (X-X), un disque porte-outils (5) capable de tourner dans les deux directions de rotation par rapport au corps de base fixe (1) autour d'un axe de rotation qui est coaxial au et coïncident avec ledit axe longitudinal (X-X), ledit disque porte-outils (5) étant monté à l'extrémité d'un arbre (3) qui s'étend suivant ledit axe longitudinal (X-X), un premier corps annulaire cylindrique (15) qui est calé sur ledit arbre (3) et est seulement libre de coulisser axialement dessus entre une première position axiale et une deuxième position axiale contre des moyens élastiques (16) agissant entre ledit premier corps cylindrique (15) et ledit disque porte-outils (5), un deuxième corps annulaire cylindrique (20), qui est également calé sur ledit arbre (3) et capable de tourner par rapport à celui-ci, ledit deuxième corps cylindrique (15) ayant une pluralité de chemins de came symétriques (17, 17a, 17b,17c, 17d) agencés sur une circonférence de la surface avant de son extrémité proximale par rapport audit disque porte-outils (5), des éléments de blocage (14, 10, 12) pour bloquer ledit disque porte-outils (5) par rapport audit corps de base fixe (1) quand ledit premier corps annulaire cylindrique (15) est dans sa première position axiale et pour le débloquer quand il est dans sa deuxième position axiale, ledit premier corps annulaire cylindrique (15) ayant une pluralité d'éléments suiveurs de came (18) engagés au niveau de leur partie avant avec des chemins de came symétriques respectifs (17,17a,17b,17c,17d) dudit deuxième corps annulaire (20), lesdits éléments suiveurs de came et lesdits chemins de came amenant ledit premier corps annulaire cylindrique (15) à se déplacer axialement sur ledit arbre (3) dans l'une ou l'autre direction en conséquence de déplacements angulaires dudit deuxième corps annulaire cylindrique (20), un servomoteur électrique (6), qui est relié cinématiquement audit deuxième corps annulaire cylindrique (20) pour communiquer à celui-ci des déplacements angulaires dans les deux directions de rotation coaxiales audit arbre (3), **caractérisée en ce que** ledit premier corps annulaire cylindrique (15) est relié cinématiquement (34,35) à un arbre tubulaire auxiliaire (36) coaxial audit arbre (3), et ayant un dispositif de freinage (38) qui le bloque en rotation lors de l'actionnement.

2. Tourelle selon la revendication 1, **caractérisée en ce que** ledit deuxième corps annulaire cylindrique (20) a une nervure (28), une nervure (28) qui fait saillie axialement vers ledit disque porte-outils (5) et s'étend sur un arc donné d'une circonférence (β), **en ce que** ledit arbre (3), connecté audit disque porte-outils (5), est couplé audit premier corps annulaire cylindrique (15) ayant un épaulement avant (29), faisant face audit deuxième corps annulaire cylindrique (20) et s'étendant sur un arc donné d'une circonférence (α) qui coïncide radialement avec la circonférence de la nervure (28) qui fait saillie axialement hors dudit deuxième corps annulaire cylindrique (20), dans la portion de l'arc qui n'est pas couverte par ladite nervure, les extrémités circonférentielles (30, 31) de ladite nervure (28) et celles (32, 33) dudit épaulement définissant des butées respectives, de manière que, quand lesdites butées sont mutuellement engagées, elles soient adaptées pour transférer les déplacements angulaires générés par ledit servomoteur (6) audit arbre (3).

3. Tourelle selon la revendication 1 ou 2, **caractérisée en ce que** lesdits éléments de blocage comprennent un premier anneau de dents (10) porté par ledit corps de base fixe (1) et agencé autour dudit axe longitudinal (X-X) de ladite cavité (2), un deuxième anneau de dents (12) concentrique avec ledit premier anneau de dents et porté par ledit disque porte-outils rotatif (5), un troisième anneau de dents (14) fixé à l'extrémité axiale faisant face au disque porte-outils (5) dudit premier corps annulaire cylindrique (15).

4. Tourelle selon les revendications 1 et 3, **caractérisée en ce que** ledit dispositif de freinage (38) est un frein électromagnétique qui est couplé à l'extrémité (37) dudit arbre auxiliaire (36) relié cinématiquement audit premier corps annulaire cylindrique (15).

5. Tourelle selon les revendications 1 à 4, **caractérisée en ce que** chacun desdits chemins de came symétriques comprend une cavité (17b) dont le fond plat (17c) est plus bas qu'une surface plane de référence (17a) et dont les côtés (17d) comprennent des sections plates qui sont inclinées symétriquement par rapport au fond (17c) de la cavité.

6. Tourelle selon les revendications 1 à 5, **caractérisée en ce que** lesdits éléments suiveurs de came comprennent des galets (18) tournant librement autour d'axes respectifs (19) supportés par ledit premier corps annulaire cylindrique (15), la périphérie desdits galets étant en contact avec des chemins de came respectifs portés par ledit deuxième corps annulaire cylindrique (20).

7. Tourelle selon la revendication 1 ou 2, **caractérisée en ce que** ledit premier corps annulaire cylindrique (15) a au moins une cavité (34) sur sa surface périphérique extérieure, **en ce que** ledit arbre tubulaire auxiliaire (36) a au moins une dent (35) engagée de manière rotative avec ladite cavité (34) et capable d'une translation axiale par rapport à celle-ci.

8. Tourelle selon l'une quelconque des revendications 1 à 7, **caractérisée en ce qu'**il comprend un élément de sollicitation pré-chargé axialement (24) situé entre ledit deuxième corps annulaire cylindrique (20) et un élément d'arrêt (25) consistant en un épaulement axial formé dans ledit arbre (3).

9. Tourelle selon la revendication 8, **caractérisée en ce que** ledit élément de sollicitation pré-chargé est une rondelle Belleville (24) placée concentrique avec ledit arbre (3) du disque porte-outils (5), ledit élément d'arrêt étant réglable par interposition d'une cale (26) pour communiquer la pré-charge désirée à la rondelle Belleville.

10. Tourelle selon l'une quelconque des revendications 1 à 9, **caractérisée en ce que** l'axe de rotation du servomoteur est placé coaxial avec l'arbre tournant (3) du disque porte-outils (5).

11. Tourelle selon l'une quelconque des revendications 1 à 10, **caractérisée en ce que** l'axe de rotation du servomoteur (6) est décalé par rapport à l'axe de rotation (3) du disque porte-outils (5) et est connecté à celui-ci avec des éléments cinématiques (60) interposés entre eux.

12. Tourelle selon l'une quelconque des revendications 1 à 11, **caractérisée en ce que**, quand les éléments suiveurs de came (18) portés par ledit premier corps annulaire cylindrique (15) viennent en contact avec les côtés (17d) des chemins de came (17b) portés par le deuxième corps annulaire cylindrique (20) et quand ledit premier corps annulaire cylindrique (15) est soumis à une pré-charge élastique prédéterminée (16), ils sont adaptés pour transférer les déplacements angulaires générés par ledit servomoteur (6) à l'arbre (3) du disque porte-outils (5).
